# EUROPEAN PATENT APPLICATION

(11) **EP 1 679 204 A2**
(43) Date of publication of application: **12.07.2006**
(21) Application number: 05076964.5
(22) Date of filing: 26.08.2005
(51) Int. Cl.: B60C 11/24

(54) **Tire with a wear-indicating fluorescent layer.**

(30) Priority: 29.09.2004 IT PA20040006 U
(71) Applicant: Prestigiacomo, Riccardo, 90136 Palermo (IT)
(72) Inventor: Prestigiacomo, Riccardo, 90136 Palermo (IT)

(57) **Abstract**

The VCP -visible consumption pneumatic- is a pneumatic that, upon consumption of the tire ridges, signals in a visible manner the necessity of its substitution to then guarantee greater efficiency and greater security with its use.

## Description

The "VCP..." is a pneumatic that upon consumption of the tire ridges signals in a visible manner the necessity of its substitution, to then guarantee greater efficiency and greater security with its use.

The VCP is a pneumatic made in the same mode of production already in use, but that, after the material of the tire ridges is impregnated with fluorescent material of the same mixture or any other compatible mixture, created in any color (preferably yellow) to allow immediate visibility of the consumption.

The VCP allows the user to be more aware of their safety and guarantees greater security to any patron of the road. Furthermore, it allows traffic controllers and authorities immediate verification of the state of the tire ridges, thereby determining the obligation of the consumer to substitute the pneumatics.

The invention of the VCP allows the possible production and commercialization, also in large scale, with great penetration of the international market and with greater success, if it is supported by the law of obligation of use, established by laws declared by competing enterprises in every single state that is concerned with its citizens' safety and greater severity to guarantee security on the roads.

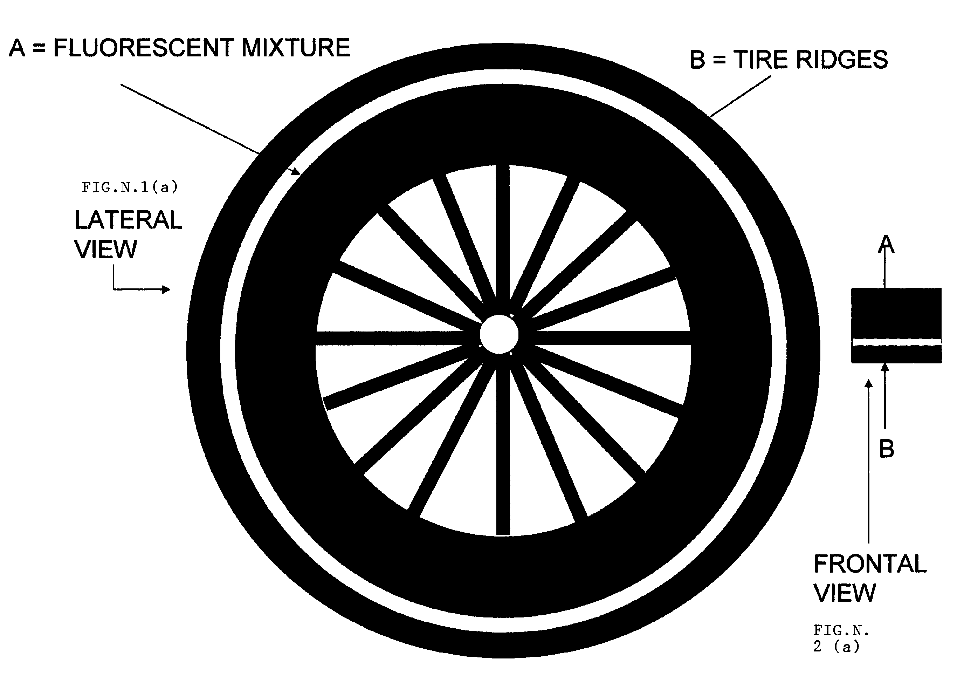

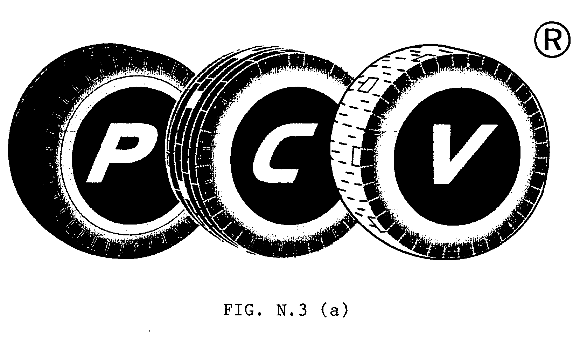

## Claims

1. the pneumatic named "VCP" (visible consumption pneumatic) allows the visibility of the consumption of the tire ridges through a fluorescent layer;

2. the fluorescent layer becomes visible through the use of the normal security edge of the tire ridges of the pneumatics;

3. the application of the fluorescent layer can be done on every kind of pneumatic on the market;

4. the visible consumption becomes truly visible to the drivers, who will have to repair it for their own security, and, in the mean time, to the traffic controllers and authorities, allowing an immediate verification of the state of the pneumatics;

5. the modes of construction- production of the "VCP" are compatible with the current production procedures and enterprises do not need to pursue onerous investments for its production;

6. for the fluorescent layer, the "VCP" adopts the same mixture of tire material of the traditional pneumatic impregnated with the fluorescent material;

7. the fluorescent layer can be obtained, in any case, in any other mixture compatible with the mixture already in use for the construction of the pneumatics;

8. the possibility of penetration into the market in large scale, considering that it will be able to be supported by the `obligational' use of the "VCP" in those countries that will utilize it under obligational law.
